Europäisches Patentamt

European Patent Office

Office européen des brevets

(19)

(11) Veröffentlichungsnummer: **0 147 384**
**A2**

(12) ## EUROPÄISCHE PATENTANMELDUNG

(21) Anmeldenummer: 84890241.7

(22) Anmeldetag: 12.12.84

(51) Int. Cl.⁴: **B 62 H 3/10**

(30) Priorität: 15.12.83 AT 4372/83

(43) Veröffentlichungstag der Anmeldung:
03.07.85 Patentblatt 85/27

(84) Benannte Vertragsstaaten:
BE CH DE FR GB IT LI LU NL

(71) Anmelder: Kunath, Martin
Esterhazygasse 15
A-1060 Wien(AT)

(71) Anmelder: Kasyk, Willibald
Mollardgasse 56/12
A-1060 Wien(AT)

(72) Erfinder: Kunath, Martin
Esterhazygasse 15
A-1060 Wien(AT)

(72) Erfinder: Kasyk, Willibald
Mollardgasse 56/12
A-1060 Wien(AT)

(74) Vertreter: Puchberger, Georg, Dipl.-Ing. et al,
Patentanwälte Dipl.-Ing. Georg Puchberger Dipl.-Ing.
Rolf Puchberger Dipl.-Ing. Peter Puchberger
Singerstrasse 13
A-1010 Wien(AT)

(54) **Fahrradhaltevorrichtung.**

(57) Die Erfindung betrifft einen Fahrradhalter, der zumindest zwei miteinander verbundene Schenkel aufweist, die etwa parallel zur Fahrbahnebene angeordnet sind und zwischen denen das Fahrrad gehalten ist.

Der erfindungsgemäße Fahrradhalter ist dadurch gekennzeichnet, daß die Schenkel (3, 4) zur Aufnahme der Tretkurbel (8) des Fahrrades ausgebildet sind und daß die Schenkel (3, 4) an einer etwa senkrecht zur Fahrbahnebene stehenden Befestigungsvorrichtung (1) befestigt sind.

FIG.6

EP 0 147 384 A2

Die Erfindung betrifft einen Fahrradhalter, der zumindest zwei miteinander verbundene Schenkel aufweist, die etwa parallel zur Fahrbahnebene angeordnet sind und zwischen denen das Fahrrad gehalten ist.

Ein solcher Fahrradhalter ist bereits durch die GB-PS 9492/95 bekannt geworden. Dieser bekannte Fahrradhalter hält das Fahrrad an einem der Reifen am vorderen oder hinteren Ende des Rades fest. Dieser Fahrradhalter ist allerdings nicht geeignet, das Fahrrad sicher zu halten. Weiters kann mit diesem Fahrradhalter das Fahrrad nicht gegen Diebstahl gesichert werden.

Es ist Aufgabe der Erfindung, die vorstehend genannten Nachteile zu beseitigen. Die Erfindung ist in erster Linie dadurch gekennzeichnet, daß die Schenkel zur Aufnahme der Tretkurbel des Fahrrades ausgebildet sind und daß die Schenkel an einer etwa senkrecht zur Fahrbahnebene stehenden Befestigungsvorrichtung befestigt sind.

Die Erfindung ist in der Zeichnung beispielsweise dargestellt, und es zeigen die Fig. 1 bis 5 eine Ausführungsform der erfindungsgemäßen Haltevorrichtung. Fig. 1 zeigt die Haltevorrichtung in einer Vorderansicht und Fig. 2 in einer Seitenansicht. Fig. 3 ist eine Draufsicht, und in Fig. 4 ist die Haltevorrichtung geschnitten dargestellt. Fig. 5 zeigt schematisch die Erfindung, wie sie in der Praxis zum Abstellen eines Fahrrades eingesetzt werden kann. Die Fig. 6 und 7 zeigen zwei weitere Ausführungsformen der Erfindung.

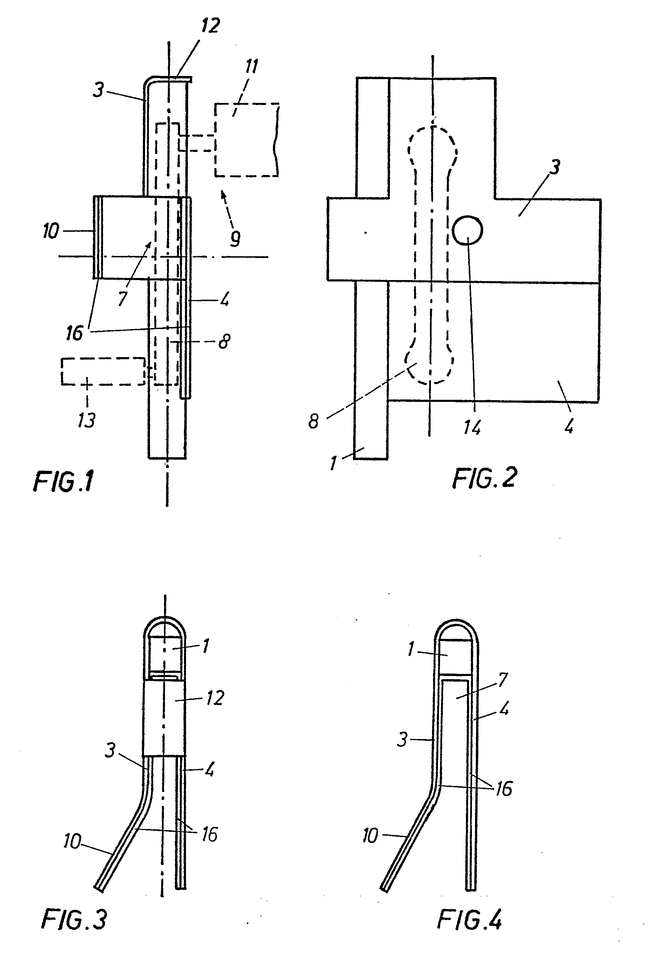

Der Fahrradhalter weist gemäß Fig. 1 - 5 eine im Boden verankerte Befestigungsstange 1 auf, an der die Haltevorrichtung 2 z.B. mittels

0147384

Schweißen oder Schrauben befestigt ist. Die Befestigungsstange 1 steht im wesentlichen senkrecht zum Boden bzw. zur Fahrbahn.

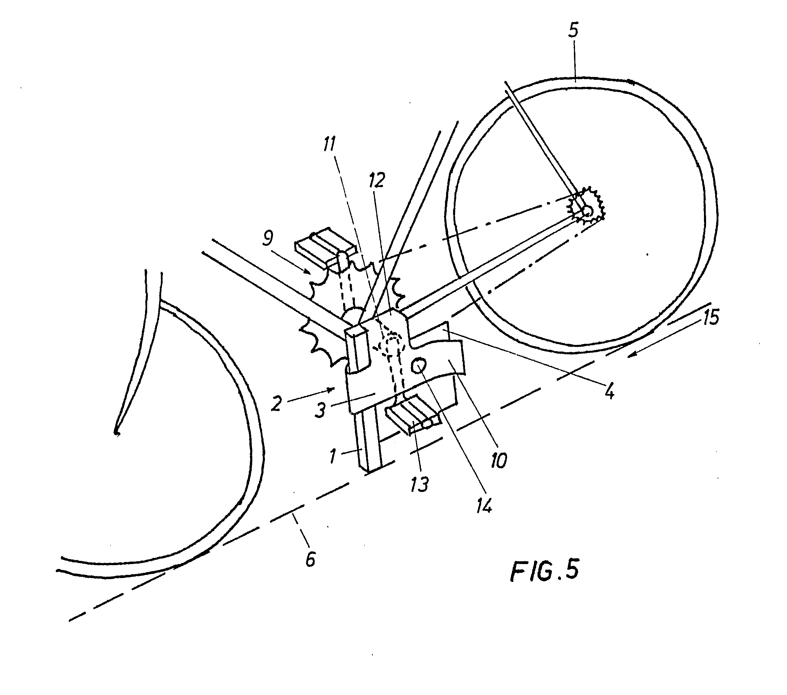

Die Haltevorrichtung 2 besteht im wesentlichen aus zwei Schenkeln, nämlich dem äußeren Schenkel 3 und dem inneren Schenkel 4, die sich entgegen der Einschubrichtung 15 der Tretkurbel erstrecken (siehe Fig. 5) und parallel zur Fahrbahnebene liegen. Die Fahrbahnebene ist dabei die gemeinsame Tangente 6 der beiden Räder 5 des Fahrrades.

Die beiden Schenkel 3, 4 sind im hier dargestellten Ausführungsbeispiel durch U-förmiges Biegen eines Metallbleches gebildet und mit der Befestigungsstange 1 als Verbindungsstück fest verbunden, z.B. durch Schrauben oder Schweißen. Zwischen den beiden Schenkeln 3, 4 liegt der Aufnahmeschlitz 7, in den die Tretkurbel 8 des Getriebes 9 eingeschoben werden kann. Der Schenkel 3 ist zumindest über einen Teil seiner Länge schräg nach außen abgebogen (Teil 10), wodurch das Einschieben der Fahrradkurbel erleichtert wird. Weiters ist der Schenkel 3 nach oben verlängert und nach innen umgebogen, sodaß er das Tretlager 11 übergreift (Lasche 12). Durch diese Lasche 12 wird verhindert, daß die in der Haltevorrichtung verrastete Kurbel mit dem Fahrrad nach oben herausgezogen werden kann, wenn das Pedal 13 aus der Tretkurbel 8 herausgeschraubt wird.

Zumindest einer der Schenkel 3 oder 4 weist eine Ausnehmung 14 auf, durch die eine das Fahrrad sichernde Sicherungskette od.dgl. gezogen werden kann, um das Fahrrad am Fahrradhalter gegen unbefugtes Entnehmen zu sichern. Die Innenseite der Schenkel 3, 4 ist mit einer Gummi- oder Kunststoffauflage 16 beschichtet, um einerseits Beschädigungen der Tretkurbel zu vermeiden und um andererseits den Stand des Fahrrades im Fahrradhalter sicherer zu machen.

Im folgenden sei die Funktionsweise der zuvor beschriebenen Konstruktion beschrieben: Beim Abstellen des Fahrrades wird vorerst das linke Pedal 13 in die tiefste Stellung gebracht. Das Fahrrad wird dann mit der senkrecht nach unten stehenden (linken) Kurbel in die Haltevorrichtung 2 eingeschoben, sodaß die aus starrem Material bestehenden Schenkel 3, 4 die Kurbel umschließen.

Diese Art der Konstruktion läßt die verschiedenartigsten Anbringungsmöglichkeiten sowie die verschiedensten Materialien zu. Bei Versehung
der Schenkel 3, 4 der Haltevorrichtung mit einer Bohrung 14, durch die
ein Absperrschloß gezogen werden kann, und bei Anbringung einer Lasche 12
ist das Fahrrad vor Diebstahl gesichert, da weder das Fahrrad zurückgeschoben noch bei Demontage des Pedals das Fahrrad nach oben hin herausgezogen werden kann.

Beginnt der äußere Schenkel 3 der Haltevorrichtung in einer Höhe von
15 cm und endet der innere Schenkel 4 in einer Höhe von 22 cm, kann
diese Haltevorrichtung für alle gängigen Fahrradtypen verwendet werden.

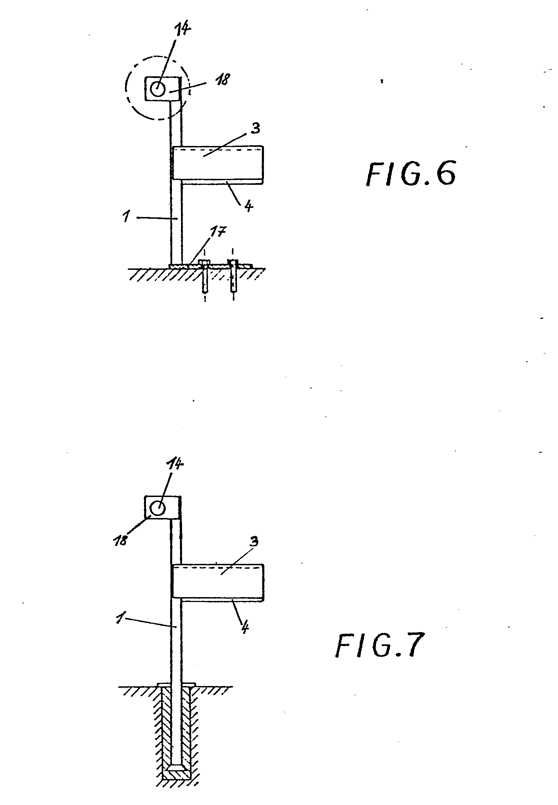

Weitere Ausführungsbeispiele des erfindungsgemäßen Fahrradhalters sind
in den Fig. 6 und 7 dargestellt. Die zu den in Fig. 1 - 5 analogen
Teile haben gleiche Bezugszeichen.

Die beiden Ausführungsformen in den Fig. 6 und 7 unterscheiden sich dadurch, daß in Fig. 6 die Befestigungsstange 1 an einer mit dem Boden
befestigbaren Bodenplatte 17 angeordnet ist, während in Fig. 7 die Befestigungsstange 1 verlängert und mit dem verlängerten Teil im Boden
verankerbar ist.

Die beiden Schenkel 3, 4 sind einfache rechteckige Metallplatten, die
an jeweils einem Ende an der Befestigungsstange 1, z.B. mittels Schweißen,
befestigt sind. Der Schenkel 3 ist analog den Darstellungen in den
Fig. 3 und 4 nach der Seite hin aufgebogen. Die Schenkel 3 und 4 haben
gleiche Breite, sind aber an der Befestigungsstange etwas in der Höhe versetzt angeordnet. Der Schenkel 4, der dem Fahrrad bzw. dessen Kettenrad
näherliegt, sitzt etwas tiefer als der außenliegende Schenkel 3. Durch
dieses Versetzen ist gewährleistet, daß Fahrräder auch mit tieferliegenden Tretlagern in den Fahrradhalter eingeschoben werden können, wobei
aber durch den äußeren, höher gesetzten Schenkel 3 der notwendige Halt
gewährleistet ist.

Für die Sicherung des Fahrrades gegen Diebstahl ist die Ausnehmung 14 hier
an einem getrennten Flansch 18 angeordnet. Diese Anordnung der Bohrung 14
in einem höheren Abstand vom Boden bietet den Vorteil, daß die Sicherungskette einfacher am Fahrradrahmen befestigt werden kann.

Die Montage der Fahrradhalter gemäß den Fig. 6 und 7 erfolgt in einem Fall am einfachsten mit Schrauben, was bei festen Fahrbahnoberflächen, wie Beton, Asphalt etc., vorteilhaft ist. Die Befestigung im Falle der Fig. 7 erfolgt dadurch, daß die Befestigungsstange 1 in ein entsprechendes Loch im Boden eingesetzt wird und dieses Loch dann mit verfestigbarem Material, wie z.B. Beton, gefüllt wird.

Wie zuvor bereits gesagt, sind die Schenkel 3, 4 bei den Ausführungsbeispielen gemäß den Fig. 6 und 7 gegeneinander versetzt. In bevorzugter Weise befindet sich die untere Kante des inneren Schenkels 4 in einer Höhe von 16 cm über Boden und die obere Kante dieses Schenkels 22 cm über Boden. Der äußere Schenkel 3 ist um 1 cm nach unten versetzt, sodaß sich die untere Kante 15 cm und die obere Kante 21 cm über Boden bzw. über der Fahrbahn 6 befinden. Diese Abmessungen gewährleisten, daß alle gängigen Fahrradtypen in dem erfindungsgemäßen Fahrradhalter abgestellt werden können. In bevorzugter Weise ist auch die Bodenplatte 17 in dem Ausführungsbeispiel gemäß Fig. 6 und ebenso auch der Flansch 18 aus einer Metallplatte von 6 cm Breite hergestellt, sodaß die Teile 3, 4, 17 und 18 aus der gleichen Metallplatte hergestellt werden können, was fertigungsmäßig und kostenmäßig vorteilhaft ist.

Patentansprüche
================================

1. Fahrradhalter, der zumindest zwei miteinander verbundene Schenkel aufweist, die etwa parallel zur Fahrbahnebene angeordnet sind und zwischen denen das Fahrrad gehalten ist, dadurch gekennzeichnet, daß die Schenkel (3, 4) zur Aufnahme der Tretkurbel (8) des Fahrrades ausgebildet sind und daß die Schenkel (3, 4) an einer etwa senkrecht zur Fahrbahnebene stehenden Befestigungsvorrichtung (1) befestigt sind.

2. Fahrradhalter nach Anspruch 1, dadurch gekennzeichnet, daß der außen liegende Schenkel (3) über zumindest einen Teil seiner Länge nach außen abgebogen ist (10), um das Einschieben der Tretkurbel (8) zu erleichtern.

3. Fahrradhalter nach Anspruch 1 oder 2, dadurch gekennzeichnet, daß der außen liegende Schenkel (3) nach oben verlängert und das Tretlager übergreifend ausgebildet ist (Lasche 12).

4. Fahrradhalter nach einem der vorhergehenden Ansprüche 1 bis 3, dadurch gekennzeichnet, daß zumindest einer der Schenkel (3, 4) eine Ausnehmung (14) zur Befestigung einer das Fahrrad sichernden Sicherungskette od.dgl. aufweist.

5. Fahrradhalter nach einem der vorhergehenden Ansprüche 1 bis 3, dadurch gekennzeichnet, daß die Befestigungsvorrichtung (1) eine Befestigungsstange ist, die nach oben über die Schenkel (3, 4) hinaus verlängert ist und an der Verlängerung die Ausnehmung (14) zur Aufnahme einer Sicherungskette od.dgl. trägt.

6. Fahrradhalter nach einem der vorhergehenden Ansprüche 1 bis 5, dadurch gekennzeichnet, daß die Innenseiten der Schenkel (3, 4) mit einer Gummi- oder Kunststoffauflage (16) beschichtet sind.

7. Fahrradhalter nach einem der vorhergehenden Ansprüche 1 bis 6, dadurch gekennzeichnet, daß die Höhe des unteren Randes des äußeren Schenkels (3) und die Höhe des oberen Randes des inneren Schenkels (4) den Abmessungen der verschiedenen Fahrradtypen angepaßt sind und in bevorzugter Weise zwischen 15 und 16 cm sowie zwischen 21 und 22 cm über Fahrbahn (6) betragen.

8. Fahrradhalter nach einem der vorhergehenden Ansprüche 1 bis 7, dadurch gekennzeichnet, daß die beiden Schenkel (3, 4) gleiche Breite aufweisen und in der Höhe ihrer Anordnung über Boden gegeneinander versetzt vorgesehen sind.

9. Fahrradhalter nach Anspruch 8, dadurch gekennzeichnet, daß der dem Fahrrad näher liegende (innere) Schenkel (4) tiefer und der äußere Schenkel (3) höher angeordnet ist.

FIG.1

FIG.2

FIG.3

FIG.4

0147384

FIG.5

FIG.6

FIG.7